# FASCICULE DE BREVET EUROPEEN

(11) **EP 0 939 745 B1**
(45) Date de publication et mention de la délivrance du brevet: **05.11.2003**
(21) Numéro de dépôt: 98944009.4
(22) Date de dépôt: 17.09.1998
(51) Int. Cl.: C03B 27/044

(54) **DISPOSITIF DE REFROIDISSEMENT DE VOLUMES EN VERRE**
VORRICHTUNG ZUR KÜHLUNG VON GLASVOLUMEN
DEVICE FOR COOLING GLASS VOLUMES

(30) Priorité: 19.09.1997 FR 9711717
(43) Date de publication de la demande: 08.09.1999
(73) Titulaire: SAINT-GOBAIN GLASS FRANCE, 92400 Courbevoie (FR)
(72) Inventeur: BREMER, Carsten, F-71100 Chalon sur Saône (FR)
(74) Mandataire: Le Cam, Stéphane Georges Elie
(86) Numéro de dépôt international: FR9801990
(87) Numéro de publication internationale: WO99015469

(56) Documents cités:
- FR-A- 2 714 903

## Description

L'invention concerne le refroidissement de volume en verre, par exemple la trempe de plaques en verre présentant une courbure dans plusieurs directions, notamment de plaques destinées à constituer des vitres de véhicule.

Il est connu de réaliser un tel refroidissement au moyen de deux caissons de soufflage de gaz de refroidissement respectivement inférieur et supérieur disposés en vis-à-vis.

Certains caissons, destinés à la trempe de plaques bombées, présentent une région centrale de part et d'autre de laquelle sont articulées deux régions latérales ; complexes, ils sont de ce fait onéreux, mais permettent de tremper des plaques de géométries diverses dans la gamme supérieure à 4 mm d'épaisseur environ.

Cependant, la tendance actuelle étant de fabriquer des plaques plus minces et de formes plus complexes, les différences de distances entre caisson et plaque sur la surface de celle-ci ont des conséquences plus importantes, et l'impossibilité de respecter suffisamment la distance idéale plaque-caisson sur de nombreuses zones de la surface de la plaque génère des tensions internes fragilisant la plaque.

D'autres caissons, " dédiés " à la plaque à tremper et aux plaques de géométries très voisines, permettent de tremper des plaques de formes complexes, mais à chaque changement de type de plaque, il est nécessaire de changer le caisson. Comme les caissons ne sont utilisés que pendant une période égale à la " durée de vie " d'un type de plaque, par exemple de lunette arrière ou vitre latérale, il est impératif d'en baisser le prix de revient, et à l'heure actuelle, ce prix n'a pu être réduit suffisamment.

En effet, ces caissons actuels sont réalisés à partir de pièces assemblées soit par utilisation de visserie et collage, soit par soudage, opérations effectuées manuellement qui nécessitent une main d'oeuvre importante.

L'invention a pour but de remédier à ces inconvénients et de créer des caissons de refroidissement dont le prix de revient et les coûts de mise en oeuvre soient modérés, et qui permettent une grande précision de l'opération de refroidissement, par exemple de trempe.

Ce but est atteint selon l'invention par un caisson pour le refroidissement et plus particulièrement la trempe de plaques de verre, comportant des buses formant une zone de soufflage, un support rigide associé à au moins une joue sur laquelle sont fixées des buses, chaque buse étant constituée de deux flasques et une barrette percée de trous de soufflage et les flasques étant réalisés en une seule pièce comportant des languettes pliées en direction des flasques voisins, les fixations des flasques entre-eux et des barrettes aux flasques étant réalisées par rivetage et/ou interposition d'un mastic.

Selon une réalisation préférée de l'invention et pour une meilleure fixation des buses, le caisson comporte au moins un tirant traversant l'ensemble des buses et la joue.

De préférence encore et pour minimiser la déformation des flasques. des entretoises sont enfilées autour du tirant.

Dans une variante préférée de l'invention conférant une rigidité encore accrue de la structure, le caisson comporte :
↪ un support rigide comportant deux joues et deux faces reliant ces deux joues,
↪ un ensemble de buses qui se succèdent d'une joue à l'autre et s'étendent d'une face à l'autre en saillant hors du support vers un espace de refroidissement, la barrette percée de trous de soufflage étant insérée entre les flasques le long d'au moins un tronçon de bord de ceux-ci pour constituer la sortie de soufflage et étant fixée aux flasques par rivetage, les languettes étant pliées à angle droit en direction des flasques voisins, au moins certaines languettes étant superposées et fixées ensemble par rivets et interposition d'un mastic,
↪ des tirants de fixation de l'ensemble de buses au support, traversant cet ensemble et les joues, et des entretoises enfilées autour d'eux et comportant entre les flasques voisins appartenant à deux buses voisines une surface limitant la déformation des flasques.

Grâce à la structure qui a pu être adoptée par suite de l'assemblage du type riveté-collé, et en particulier à la rapidité des opérations de pliage, au gain de poids, et à la réduction du nombre de soudures et des composants, le but mentionné plus haut a pu être atteint sans concession au niveau de la qualité du produit obtenu au moyen du dispositif selon l'invention.

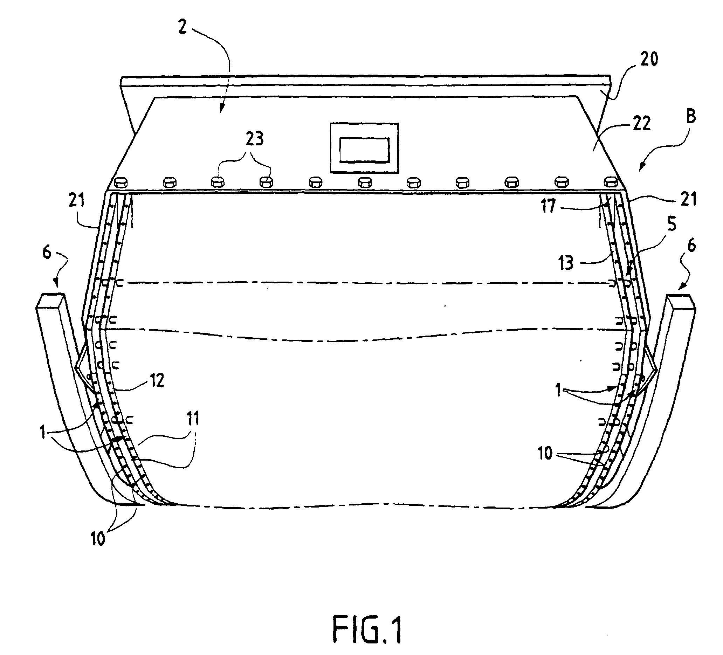

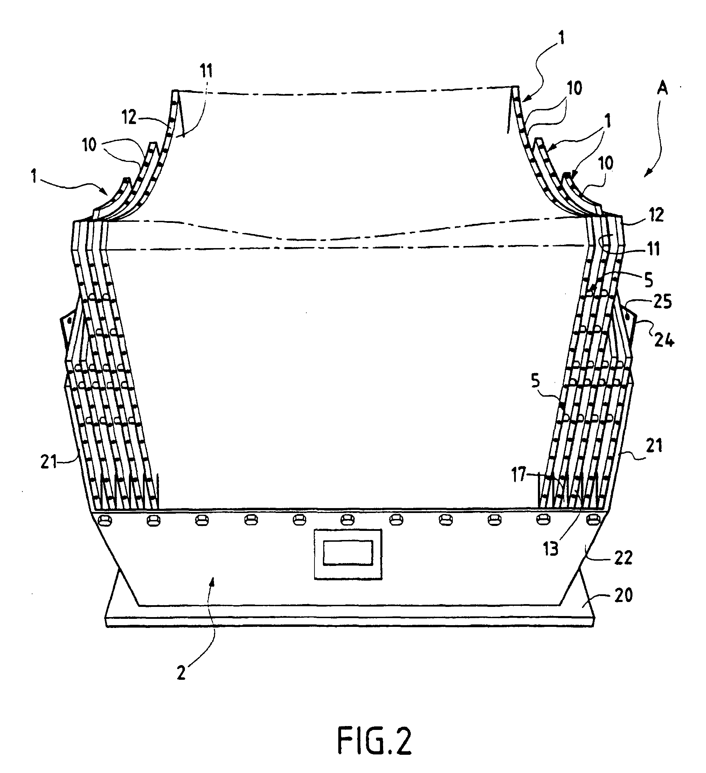

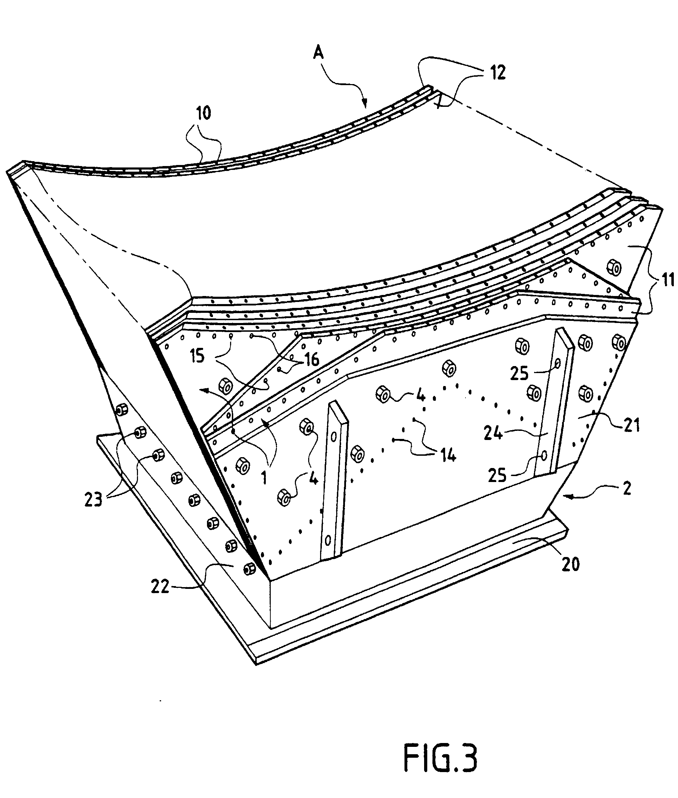

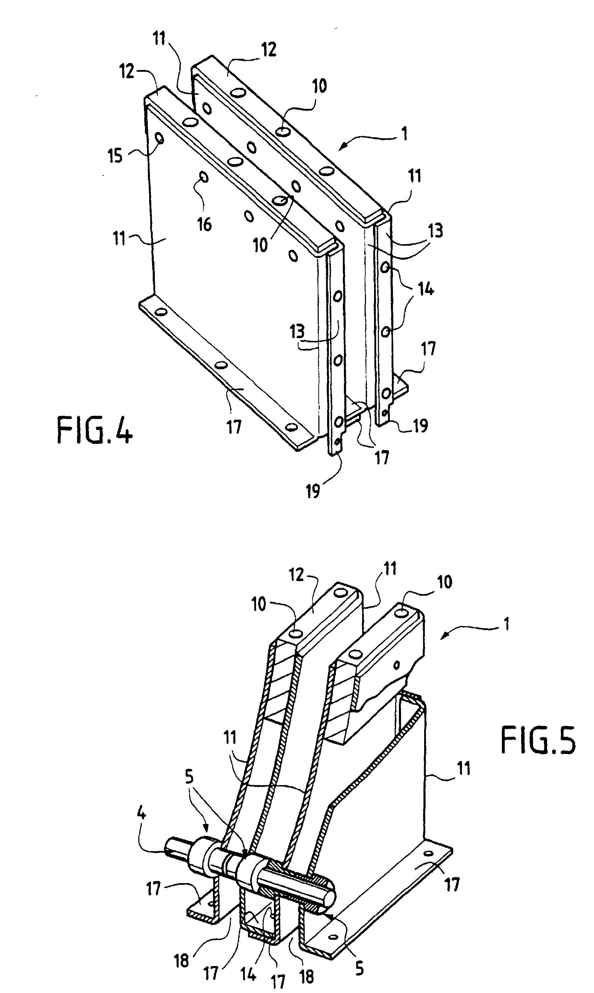

D'autres caractéristiques et avantages de cette invention ressortiront des revendications dépendantes et de la description qui va suivre d'une forme de réalisation de celle-ci donnée à titre d'exemple non limitatif, illustrée par les dessins joints dans lesquels :
□ **les figures 1 et 2** sont des vues partielles en perspective des éléments respectivement supérieur et inférieur constituant un dispositif selon l'invention,
□ **la figure 3** est une vue en perspective sous un angle différent, de l'élément inférieur, de la figure 2,
□ **les figures 4 et 5** sont des vues en perspective de détails de montage d'organes appartenant aux éléments des figures 1 et 2.

Le dispositif de refroidissement, par exemple de trempe, de volumes en verre, illustré par les figures, comprend deux caissons A, B, respectivement inférieur et supérieur disposés en vis-à-vis, munis chacun de buses 1 présentant une face de sortie comportant des trous 10 par lesquels est soufflé de l'air ou un autre gaz de refroidissement approprié introduit dans la buse par une lumière d'entrée.

Pour chaque caisson, les faces de sortie définissant une surface de soufflage présentant une forme épousant approximativement la courbure du volume, par exemple une plaque, à tremper, et les surfaces de soufflage respectives des deux caissons, disposées en vis-à-vis, délimitent entre elles un espace de refroidissement pour l'insertion de la plaque.

Chaque caisson A, B comporte une nourrice 2, qui est un support en tôle suffisamment rigide pour que l'on puisse minimiser l'épaisseur des tôles constituant les buses, réalisé par mécano-soudure, assurant la liaison entre un circuit d'alimentation en gaz de refroidissement et les buses.

La nourrice comporte une plaque de base 20 d'un côté de laquelle sont soudées deux joues latérales 21 disposées en vis-à-vis à une distance dépendant des dimensions des plaques à tremper et deux faces 22 reliant ces deux joues aux extrémités de celles-ci, également en vis-à-vis à une distance dépendant des dimensions des plaques. La plaque de base est percée, dans sa région délimitée entre les joues et les faces, d'un trou par exemple circulaire s'étendant aussi près que possible de ces joues et de ces faces, constituant l'entrée du caisson pour le gaz de refroidissement.

Pour chaque caisson A, B, les buses 1 sont assemblées pour constituer un ensemble pouvant être interchangeable fixé au support 2, les buses étant disposées en succession d'une joue 21 à l'autre et s'étendant chacune d'une face 22 à l'autre en faisant saillie hors du support du côté de leur sortie de soufflage.

Chaque buse 1 est constituée par deux flasques 11 par exemple en tôle d'acier galvanisé pliée, et par une barrette 12 percée des trous 10 pour constituer la face de sortie de la buse, insérée entre les deux flasques le long d'au moins un tronçon de bord de ceux-ci.

Chaque flasque 11 d'une buse 1 est fixé à l'autre flasque 11 de la même buse par le fait qu'il comporte en une seule pièce des languettes 13 (figure 4) pliées à angle droit en direction de cet autre flasque, lequel comporte en regard de ces languettes, des languettes 13 pliées à angle droit en direction du premier, ces languettes s'étendent le long des bords des flasques joignant la face de sortie à la lumière d'entrée, et les languettes 13 en correspondance des deux flasques étant superposées et fixées mutuellement au oyen de rivets aveugles 14 avec interposition d'un mastic d'étanchéification (fixation riveté-collé).

Les barrettes 12 sont ici en tôle de métal ou d'alliage légers dont l'épaisseur détermine la largeur des buses ; leur profil comme on l'a vu épouse la courbure de la plaque à traiter, et celle du bord des flasques auxquels elles sont fixées, et leur hauteur est approximativement constante.

Dans chaque buse 1, la barrette 12 est fixée au flasques 11 par un ensemble rivet 15 - contre-rivet 16 la traversant ainsi que les flasques de part en part, la tête du rivet et celle du contre-rivet prenant appui sur les surfaces extérieures respectives des deux flasques. Les trous dans les flasques et dans la barrette peuvent présenter des diamètres différents selon qu'ils sont destinés au passage d'un rivet ou d'un contre-rivet ; il est possible de prévoir que pour des trous de fixation voisins, l'emplacement du rivet 15 et celui du contre-rivet 16 soient inversés (figure 4).

Chaque flasque 11 d'une buse 1 disposé en vis-à-vis d'un flasque d'une buse voisine est fixé à celui-ci par le fait qu'il comporte également en une seule pièce des languettes 17 pliées à angle droit vers l'extérieur de la buse le long de son bord délimitant la lumière d'entrée 18 de la buse et que les languettes en regard des flasques des buses voisines sont superposées et fixées mutuellement également au moyen de rivets aveugles 14 (figure 5) avec interposition d'un mastic d'étanchéification (également fixation riveté-collé).

L'ensemble de buses est fixé aux joues latérales 21 du support 2 par des tirants 4 le traversant ainsi que les joues latérales du support de part en part, dont les extrémités, filetées, reçoivent un écrou et un contre-écrou avec interposition d'une rondelle contre la joue. Afin de minimiser la déformation des flasques 11 et notamment leur écartement lors de l'opération d'assemblage du caisson et lors de la mise en pression/dépression en cours de travail, l'espace entre les buses est entretoisé. A cette fin, les trous dans les flasques pour le passage des tirants 4 présentent un diamètre supérieur à celui de ceux-ci, et des entretoises 5 sont enfilées bout à bout autour du tirant ; ces entretoises présentent un épaulement, et autour de chaque tirant les entretoises immédiatement voisines sont disposées symétriquement l'une par rapport à l'autre de telle sorte que leurs épaulements respectifs constituent des surfaces d'appui pour les surfaces extérieures à la buse de deux flasques en regard constituant une même buse (figure 5). Le nombre de tirants est réduit grâce à la rigidité de la nourrice ; étant moins nombreux, l'entretien des espaces entre les buses est plus aisé.

De plus, les flasques des buses d'extrémité qui sont en vis-à-vis des joues latérales sont appliqués contre celles-ci et leur sont fixés aussi par des rivets tels que des rivets aveugles 14.

Egalement au moins certains flasques comportent une patte 19 de fixation complémentaire s'étendant vers l'entrée de la nourrice et prolongeant soit une languette 17 de leur bord d'entrée soit une languette 13 d'un bord joignant le bord d'entrée au bord de sortie, cette patte 19 étant appliquée contre une face 22 de la nourrice et pincée entre celle-ci et un doigt porté par un écrou dans lequel est vissée une vis 23 traversant la face 22 (figures 1 à 4), éventuellement par l'intermédiaire d'une barrette courant intérieurement le long de cette face.

Le dispositif de trempe comporte également au moins une rampe de soufflage 6 fixée de préférence à une buse la plus proche d'une joue latérale de l'un des caissons A, B, extérieurement à celui-ci, et s'étendant le long de cette buse, à proximité de la surface de refroidissement. De préférence, il comporte de part et d'autre de lui deux telles rampes de soufflage 6, portées par le caisson supérieur B. Les rampes 6 protègent également les buses de trempe des chocs éventuels.

En vue de leur manutention par un convoyeur en suspension, les caissons A, B comportent des ailettes 24 portées par les joues latérales 21, en projection vers l'extérieur, présentant des oeillets 25 d'accrochage pour un câble supporté par un organe de suspension du convoyeur.

Le dispositif selon l'invention comporte donc comme les dispositifs connus un caisson supérieur B et un caisson inférieur A ainsi qu'au moins une rampe de soufflage 6, et comme eux son rôle primordial est d'assurer le refroidissement, ici, la trempe, tout en guidant le flux d'air selon des caractéristiques de débit et de vitesse bien définies. Cependant, avec le dispositif selon l'invention, ce rôle est rempli avec toute la précision requise par les plaques de verre actuellement utilisées notamment dans le domaine automobile, de faible épaisseur, et en mettant en oeuvre des caissons inférieur et supérieur identiques dans leur conception et dans leur réalisation si ce n'est dans leur géométrie, l'un ayant une courbure de barrettes généralement concave et l'autre une courbure de barrettes généralement convexe, avec la possibilité de tremper des plaques présentant un profil très complexe.

Il est par exemple possible que les buses 1 présentent des formes différentes les unes des autres, notamment celles qui sont les plus proches des joues latérales 21 de la nourrice, afin d'épouser au mieux le contour de la plaque. Dans certains cas, les extrémités de telles buses sont tronquées, la région percée de trous de soufflage 10 de leur barrette 12 étant plus courte que celle de la buse voisine en allant vers le milieu du caisson. Dans ce cas, certains tirants 4, n'atteignant pas les joues de la nourrice, sont plus courts que les autres. Néanmoins, le nombre de ces tirants de longueur différentes reste faible, et il n'en reste pas moins qu'un grand nombre des pièces utilisées sont identiques, qu'il s'agisse des tirants 4, des entretoises 5 ou des rivets 14, 15 et contre-rivets 16.

Dans un exemple de réalisation donné à titre indicatif, les faces 22 des nourrices 2 sont soudées à la plaque de base 20 en divergeant en direction de l'espace de trempe tandis que les joues latérales 21 sont soudées à cette plaque tout d'abord en divergeant également ou encore en convergeant, mais en se prolongeant au-delà de l'extrémité des faces parallèlement, et perpendiculairement à la plaque de base, de telle sorte que les buses 1 se succèdent parallèlement les unes aux autres d'une joue latérale à l'autre. Egalement, les buses s'évasent en direction de l'espace de trempe. Pour des raisons d'allégement et d'économie de matière, le bord d'entrée des buses peut être échancré en V (buses du caisson supérieur) ou en V retourné (buses du caisson inférieur). Il peut être alors utile, sinon nécessaire, de rigidifier la région centrale du caisson au moyen d'une ou plusieurs cloisons en tôle s'étendant depuis la plaque de base perpendiculairement celle-ci d'une joue à l'autre.

Cependant, bien entendu, l'invention n'est pas limitée à ces formes de réalisation, et on pourra en prévoir d'autres sans sortir de son cadre.

## Revendications

1. Caisson pour le refroidissement et plus particulièrement pour la trempe de plaques de verre, comportant des buses (1) formant une zone de soufflage, **caractérisé en ce qu'**il comporte un support rigide (2) associé à au moins une joue (21) sur laquelle sont fixées des buses (1), chaque buse (1) étant constituée de deux flasques (11) et une barrette (12) percée de trous de soufflage (10), **en ce que** les flasques (11) sont réalisés en une seule pièce comportant des languettes (13, 17) pliées en direction des flasques voisins et **en ce que** les fixations des flasques (11) entre-eux et des barrettes (12) aux flasques (11) sont réalisées par rivetage et/ou interposition d'un mastic.

2. Caisson selon la revendication précédente, **caractérisé en ce qu'**il comporte au moins un tirant (4) traversant l'ensemble des buses (1) et la joue (21).

3. Caisson selon 1a revendication précédente, **caractérisé en ce que** des entretoises (5) sont enfilées autour du tirant (4).

4. Caisson selon l'une des revendications précédentes, **caractérisé en ce qu'**il comporte :
↪ au moins deux joues (21) et deux faces (22) reliant ces joues,
↪ un ensemble de buses (1) qui se succèdent d'une joue à l'autre et s'étendent d'une face à l'autre en saillant hors du support vers un espace de refroidissement, la barrette (12) percée de trous (10) de soufflage étant insérée entre les flasques le long d'au moins un tronçon de bord de ceux-ci pour constituer la sortie de soufflage et étant fixée aux flasques par rivetage, les languettes (13, 17) étant pliées à angle droit en direction des flasques voisins, au moins certaines languettes étant superposées et fixées ensemble par rivets (14) et interposition d'un mastic,
↪ des tirants (4) de fixation de l'ensemble de buses au support, traversant cet ensemble et les joues, et des entretoises (5) enfilées autour d'eux et comportant entre les flasques voisins appartenant à deux buses voisines une surface limitant la déformation des flasques.

5. Caisson selon l'une des revendications précédentes, **caractérisé en ce que** les barrette (12) sont fixées aux flasques (11) par des ensembles rivets (15), contre-rivets (16), les traversant ainsi que les flasques (11).

6. Caisson selon l'une des revendications précédentes, **caractérisé en ce que** des flasques (11) comportent une patte (19) prolongeant une languette (13, 17) de fixation des flasques entre eux, et cette patte est appliquée contre une face (22) du support et fixée à celle-ci.

7. Caisson selon l'une des revendications précédentes, **caractérisé en ce que** l'ensemble de buses est également fixé au support (10) par des rivets aveugles (14) fixant aux joues (21) la buse (1) la plus voisine.

8. Caisson selon l'une des revendications 3 à 7, **caractérisé en ce que** les entretoises (5) présentent chacune un épaulement, et les épaulements appartenant à deux entretoises voisines et disposés en vis-à-vis constituent deux surfaces d'appui pour des flasques (11) en regard entre eux et constituant une même buse.

9. Caisson selon l'une des revendications précédentes, **caractérisé en ce que** le support (2) est un assemblage de tôles mécano-soudées.

10. Caisson selon l'une des revendications précédentes, **caractérisé en ce que** les flasques (11) sont en tôle.

11. Caisson selon l'une des revendications précédentes, **caractérisé en ce que** les barrettes de soufflage (12) sont en métal ou en alliage léger.

12. Caisson selon l'une des revendications précédentes, **caractérisé en ce qu'**il porte extérieurement au moins une rampe (6) de soufflage s'étendant le long d'une buse (1) à proximité de l'espace de refroidissement.

13. Caisson selon l'une des revendications précédentes, **caractérisé en ce que** des languettes (13) s'étendent le long des bords des flasques joignant la face de sortie à la lumière d'entrée.

14. Dispositif de refroidissement comprenant au moins deux caissons selon l'une des revendications précédentes constituant deux surfaces de soufflage en vis-à-vis définissant entre elles l'espace de refroidissement.

15. Dispositif de refroidissement selon la revendication 14 comprenant deux caissons (A, B) respectivement inférieur et supérieur, **caractérisé en ce que** le caisson supérieur (B) porte extérieurement deux rampes de soufflage (6) de part et d'autre de lui.

## Patentansprüche

1. Kasten für das Abkühlen und insbesondere Vorspannen von Glasscheiben, welcher eine Blaszone bildende Düsen (1) enthält, **dadurch gekennzeichnet, dass** er einen starren Träger (2) umfasst, der mit mindestens einer Seitenwand (21) verbunden ist, an welcher die Düsen (1) befestigt sind, wobei die Düsen (1) jeweils aus zwei Zwischenwänden (11) und einer mit Blaslöchern (10) durchbohrten Leiste (12) bestehen, und dass die Zwischenwände (11) aus einem einzigen Teil hergestellt sind, das Schenkel (13, 17) umfasst, die in Richtung der benachbarten Zwischenwände gebogen sind, und die Befestigung der Zwischenwände (11) untereinander und der Leisten (12) auf den Zwischenwänden (11) durch Vernieten und/oder Einfügen einer Klebmasse realisiert wird.

2. Kasten nach dem vorhergehenden Anspruch, **dadurch gekennzeichnet, dass** er mindestens eine Spannstange (4) umfasst, die durch die Düsen (1) und die Seitenwand (21) hindurchgeht.

3. Kasten nach dem vorhergehenden Anspruch, **dadurch gekennzeichnet, dass** die Spannstange (4) in Querriegeln (5) steckt.

4. Kasten nach einem der vorhergehenden Ansprüche, **dadurch gekennzeichnet, dass** er
- mindestens zwei Seitenwände (21) und zwei diese Seitenwände verbindende Seiten (22),
- eine Einheit aus Düsen (1), die von einer Seitenwand zur anderen aufeinander folgen und sich von einer Seite zur anderen erstrecken, wobei sie über den Träger in einen Kühlzwischenraum vorstehen, die mit Blaslöchern (10) durchbohrte Leiste (12), um den Blasausgang zu bilden, zwischen den Zwischenwänden entlang mindestens eines Randabschnitts davon eingefügt und an den Zwischenwänden durch Vernieten befestigt ist, die Schenkel (13, 17) im rechten Winkel in Richtung der benachbarten Zwischenwände gebogen sind und mindestens einige Schenkel übereinander angeordnet und miteinander durch Nieten (14) und Einfügen einer Klebmasse befestigt sind, und
- Spannstangen (4) zur Befestigung der Düseneinheit am Träger, die durch diese Einheit und die Seitenwände hindurchgehen, und Querriegel (5), die sie umschließen und zwischen den benachbarten Zwischenwänden, die zu zwei benachbarten Düsen gehören, eine Fläche enthalten, welche die Verformung der Zwischenwände begrenzt,
umfasst.

5. Kasten nach einem der vorhergehenden Ansprüche, **dadurch gekennzeichnet, dass** die Leisten (12) durch Einheiten aus Nieten (15) und Gegennieten (16), die durch sie sowie durch die Zwischenwände (11) hindurchführen, an diesen befestigt sind.

6. Kasten nach einem der vorhergehenden Ansprüche, **dadurch gekennzeichnet, dass** die Zwischenwände (11) einen Vorsprung (19) umfassen, der einen Schenkel (13, 17) zur Befestigung der Zwischenwände untereinander verlängert, sich an eine Seite (22) des Trägers anlegt und an dieser befestigt ist.

7. Kasten nach einem der vorhergehenden Ansprüche, **dadurch gekennzeichnet, dass** die Düseneinheit auch am Träger (10) durch Blindnieten (14) befestigt ist, welche die nächstliegende Düse (1) an den Seitenwänden (21) befestigen.

8. Kasten nach einem der Ansprüche 3 bis 7, **dadurch gekennzeichnet, dass** die Querriegel (5) jeweils einen Absatz aufweisen und die Absätze, die zu zwei benachbarten Querriegeln gehören und einander gegenüber angeordnet sind, zwei Auflageflächen für die Zwischenwände (11) bilden, die einander gegenüberliegen und ein und dieselbe Düse bilden.

9. Kasten nach einem der vorhergehenden Ansprüche, **dadurch gekennzeichnet, dass** der Träger (2) ein Verbund aus mechanogeschweißten Blechen ist.

10. Kasten nach einem der vorhergehenden Ansprüche, **dadurch gekennzeichnet, dass** die Zwischenwände (11) aus Blech bestehen.

11. Kasten nach einem der vorhergehenden Ansprüche, **dadurch gekennzeichnet, dass** die Blasleisten (12) aus Metall oder einer leichten Legierung bestehen.

12. Kasten nach einem der vorhergehenden Ansprüche, **dadurch gekennzeichnet, dass** er außen mindestens eine Blasrampe (6) trägt, die entlang einer Düse (1) in der Nähe des Kühlzwischenraums verläuft.

13. Kasten nach einem der vorhergehenden Ansprüche, **dadurch gekennzeichnet, dass** sich die Leisten (13) entlang der Ränder der Zwischenwände erstrecken und die Ausgangsseite mit der Eintrittsöffnung verbinden.

14. Kühlvorrichtung, welche mindestens zwei Kästen nach einem der vorhergehenden Ansprüche umfasst, die zwei einander gegenüberliegende Blasflächen bilden, die zwischen sich den Kühlzwischenraum begrenzen.

15. Kühlvorrichtung nach Anspruch 14, die zwei Kästen (A, B), einen unteren und einen oberen, umfasst, **dadurch gekennzeichnet, dass** der obere Kasten (B) auf beiden Seiten außen zwei Blasrampen (6) trägt.

## Claims

1. Chamber for cooling and more particularly for toughening glass plates, comprising nozzles (1) forming a blowing area, **characterised in that** it comprises a rigid support (2) associated with at least one side (21) to which nozzles (1) are fixed, each nozzle (1) consisting of two plates (11) and a bar (12) with blowing holes (10) in it, **in that** the plates (11) are produced in a single piece comprising tongues (13, 17) folded in the direction of the adjacent plates and **in that** the plates (11) are fixed to each other and the bars (12) are fixed to the plates (11) by riveting and/or the interposing of a mastic.

2. Chamber according to the preceding claim, **characterised in that** it comprises at least one tie rod (4) passing through all the nozzles (1) and the side (21).

3. Chamber according to the preceding claim, **characterised in that** struts (5) are fitted around the tie rod (4).

4. Chamber according to one of the preceding claims, **characterised in that** it comprises:
- at least two sides (21) and two faces (22) connecting these sides,
- a set of nozzles (1) which follow each other from one side to another and extend from one face to another whilst projecting outside the support towards a cooling space, the bar (12) with blowing holes (10) in it being inserted between the plates along at least one edge portion of these in order to constitute the blowing outlet and being fixed to the plates by riveting, the tongues (13, 17) being folded at a right angle in the direction of the adjacent plates, at least some tongues being superimposed and fixed together by rivets (14) and the interposing of a mastic,
- tie rods (4) for fixing the nozzle assembly to the support, passing through this assembly and the sides, and struts (5) fitted around them and comprising between the adjacent plates belonging to two adjacent nozzles a surface limiting the deformation of the plates.

5. Chamber according to one of the preceding claims, **characterised in that** the bars (12) are fixed to the plates (11) by sets of rivets (15) and counter-rivets (16), passing through them as well as the plates (11).

6. Chamber according to one of the preceding claims, **characterised in that** plates (11) comprise a lug (19) extending a tongue (13, 17) fixing the plates together, and this lug is applied against a support face (22) and fixed thereto.

7. Chamber according to one of the preceding claims, **characterised in that** the set of nozzles is also fixed to the support (10) by blind rivets (14) fixing the closest nozzle (1) to the sides (21).

8. Chamber according to one of Claims 3 to 7, **characterised in that** the struts (5) each have a shoulder, and the shoulders belonging to two adjacent struts and disposed facing each other constitute two support surfaces for the plates (11) facing them and constituting one and the same nozzle.

9. Chamber according to one of the preceding claims,
**characterised in that** the support (2) is an assembly of mechanically welded metal sheets.

10. Chamber according to one of the preceding claims, **characterised in that** the plates (11) are made from sheet metal.

11. Chamber according to one of the preceding claims, **characterised in that** the blowing bars (12) are made from metal or light alloy.

12. Chamber according to one of the preceding claims, **characterised in that** it carries externally at least one blowing pipe (6) extending along a nozzle (1) close to the cooling space.

13. Chamber according to one of the preceding claims, **characterised in that** the tongues (13) extend along the edges of the plates joining the outlet face to the inlet aperture.

14. Cooling device comprising at least two chambers according to one of the preceding claims constituting two facing blowing surfaces defining between them the cooling space.

15. Cooling device according to Claim 14, comprising two chambers (A, B), respectively lower and upper, **characterised in that** the upper chamber (B) carries externally two blowing pipes (6) on each side of it.
